(19) Europäisches Patentamt
European Patent Office
Office européen des brevets

(11) **EP 4 116 379 B1**

(12) **EUROPEAN PATENT SPECIFICATION**

(45) Date of publication and mention
of the grant of the patent:
**24.09.2025 Bulletin 2025/39**

(21) Application number: **20923455.8**

(22) Date of filing: **03.03.2020**

(51) International Patent Classification (IPC):
*C09K 9/02* (2006.01)     *C09D 5/00* (2006.01)
*G01N 31/00* (2006.01)    *C09D 7/20* (2018.01)
*C09D 7/41* (2018.01)     *C09D 7/62* (2018.01)
*G01N 31/22* (2006.01)

(52) Cooperative Patent Classification (CPC):
**C09K 9/02; C09D 5/00; C09D 7/20; C09D 7/41;
C09D 7/62;** G01N 31/222

(86) International application number:
**PCT/JP2020/008996**

(87) International publication number:
**WO 2021/176574 (10.09.2021 Gazette 2021/36)**

(54) **COLORING AGENT AND RELATED TECHNIQUE**

FÄRBEMITTEL UND ZUGEHÖRIGE TECHNIK

AGENT COLORANT ET TECHNIQUE ASSOCIÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(43) Date of publication of application:
**11.01.2023 Bulletin 2023/02**

(73) Proprietor: **Matsui Shikiso Chemical Co., Ltd.
Kyoto-shi
Kyoto 607-8345 (JP)**

(72) Inventors:
• **KITAGAWA, Yosuke**
  **Kyoto-shi Kyoto 607-8345 (JP)**
• **MIZUHARA, Tomohiro**
  **Kyoto-shi Kyoto 607-8345 (JP)**

(74) Representative: **Weickmann & Weickmann
PartmbB
Postfach 860 820
81635 München (DE)**

(56) References cited:
EP-A1- 2 012 112      JP-A- 2000 105 230
JP-A- 2007 040 871    JP-A- 2012 230 044
JP-A- 2012 230 044    JP-A- 2013 190 415
JP-A- H 063 345       JP-A- H0 892 511
US-A1- 2012 143 160

**Description**

[FIELD OF THE INVENTION]

The present invention relates to a composition and coloring agent that can change their colors in the presence of water or a water-containing liquid, a manufacturing method for the coloring agent, a color-changing article retaining the coloring agent, a water detection material and coloring material blended with the coloring agent, and a color-changing article to which the coloring material has been applied to bond the coloring agent.

[BACKGROUND ART]

Traditionally, there have been detection agents known to change their colors (color developments, color disappearances, color hue changes, other color component changes, and the like) with humidity changes, water content or humidity changes, and the like.

For example, a humidity detection agent carrying cobalt chloride in filter paper or silica gel develops a blue color upon drying and a red or pink color upon moisture absorption. The official gazette for JP 4597001 discloses a humidity detection agent having safranin, which is reportedly highly safe to the human body, in place of cobalt chloride, which is carcinogenic and potently toxic, carried in silica gel, and the official gazette for JP-A-2002-200423 discloses a humidity detection agent having cupric chloride carried in silica gel.

However, these detection agents are used to sense humidity changes in the air and are sensitive to the extent of necessity for storage along with a desiccant or the like, and are therefore not suitable for the detection of the presence or absence of water or liquid water in daily activity, for example.

The official gazette for Japanese Patent No. 3396971 discloses an ink composition for water indicators that loses color upon water wetting and that can be stably stored in the atmosphere, the composition comprising an organic acid, a color-developing organic compound that develops its color in the presence of an organic acid, a water-absorbing powder, and a high-molecular binder in solution or dispersion in a non-aqueous solvent. The official gazette for JP-A-2008-111774 discloses a water indicator comprising an electron-donating color-developing compound, an acidic compound that is solid at normal temperature, and an aqueous resin emulsion or an aqueous solution of a water-soluble high-molecular compound.

However, because the solubility of the color-developing compound is low in the organic acid contained in the former composition and in the acidic compound contained in the latter composition, which compound is solid at normal temperature, the developed color densities are so low that the visibility is not sufficient for a water detection agent in both cases. In addition, because the high-molecular binder in the former case is a thermoplastic resin soluble in an organic solvent, which resin is used to bond a color-developing organic compound and the organic acid that are water detection components and a water-absorbing powder to an object, the water to be detected will reach the water detection components via the high-molecular binder that is an oleophilic thermoplastic resin, so that a long time is taken for the detection. The latter is an aqueous paint having an electron-donating color-developing compound and an acidic compound that is solid at normal temperature that are water detection components both blended in an aqueous resin emulsion or an aqueous solution of a water-soluble compound. Accordingly, the paint can flow out in contact with water to affect the visibility of the water indicator. Furthermore, the organic acid contained in the former case and the acidic compound contained in the latter case, which compound is solid at normal temperature, can elute in the water detected, which in turn can pose a safety concern for intended uses in direct skin contact.

The official gazette for Patent No. 5996400 discloses a composition for water indicators, which composition contains an electron-donating color-developing organic compound, at least one kind selected from among acids having a phenolic hydroxyl group, acids having a hydroxyl group and a carboxyl group, and acids having a plurality of carboxyl groups, an aqueous and oil-soluble resin, cyclodextrin, and a solvent, wherein the composition for water indicators is colorless after application to a substrate and before detection of water but is capable of detecting water to sufficiently develop a color.

This composition for water indicators is capable of suppressing desensitization with the use of an aqueous or oil-soluble resin such as polyvinylpyrrolidone to clarify the degrees of color development and disappearance to the extent of easy visual confirmation by containing cyclodextrin. However, the inside diameter of cyclodextrin pores is extremely small at 0.45 to 0.6 nm for the α form, 0.6 to 0.8 nm for the β form, and 0.8 to 0.95 nm for the γ form, so that it is considered difficult to include relatively large molecules like electron-donating color-developing organic compounds and acids having a phenolic hydroxyl group; desensitization by the aqueous and oil-soluble resin was not sufficiently prevented, and the color density in contact with water was still insufficient.

The official gazette for JP-A-Sho-55-36326 discloses an invention of a disposable diaper or nappy comprising at least an absorbing portion and a water-impermeable sheet in contact with the absorbing portion, wherein the face of the absorbing portion of the water-impermeable sheet is coated with a molten state of a mixture of a high molecular substance that swells in the presence of water, a chemical agent selected from among powdery or solid acids or bases, and a dye that changes its color depending on the pH of an aqueous solution of the chemical agent.

However, in this invention, a pH indicator (dye) is allowed to develop a color with a urinary aqueous solution of powdery or solid acid or base; therefore, there can be a safety concern for intended uses in skin contact, and the pH indicator (dye) is diffused upon water contact, so that sufficient color densities are difficult to obtain.

EP 2 012 112 A1 discloses a coating for a humidity indicator, comprising at least an electron donative coloration compound, an acidic compound which is in a solid state at ambient temperature, a deliquescent substance, preferably salts, and an aqueous resin emulsion. Increasing humidity is indicated by discoloration of the humidity indicator.

JP 2012 230044 discloses a humidity indicator paint, comprising at least an electron-donating coloring compound, an acidic compound that is solid at room temperature, polyvinyl pyrrolidone (PVP), and moisture, wherein the weight ratio of PVP to moisture is 0.45 to 1.86. When the weight ratio of PVP to water in the humidity indicator paint is 0.45 or more, the paint solidifies in a state without color development, resulting in a colorless humidity indicator that develops color under high humidity. When the weight ratio of PVP to water is less than 0.45 in the humidity indicator paint, the paint dries in a colored state and remains colored when dry.

[PRIOR ART DOCUMENTS]

[Patent Documents]

    [Patent Document 1] Patent Gazette for Japanese Patent No. 4597001
    [Patent Document 2] Patent Gazette for JP-A-2002-200423
    [Patent Document 3] Patent Gazette for Japanese Patent No. 3396971
    [Patent Document 4] Patent Gazette for JP-A-2008-111774
    [Patent Document 5] Patent Gazette for Japanese Patent No. 5996400
    [Patent Document 6] Patent Gazette for JP-A-Sho-55-36326
    [Patent Document 7] EP 2 012 112 A1
    [Patent Document 8] JP 2012 230044

[SUMMARY OF THE INVENTION]

[PROBLEMS TO BE SOLVED BY THE INVENTION]

The present invention is intended to provide a composition and coloring agent that can change their colors as clearly as possible in the presence of water or a water-containing liquid, a manufacturing method for the coloring agent, a color-changing article retaining the coloring agent, a water detection material and coloring material blended with the coloring agent, and a color-changing article to which the coloring material has been applied to bond the coloring agent.

[MEANS OF SOLVING THE PROBLEMS]

The present invention is defined in the appended claims.

[ADVANTAGEOUS EFFECT OF THE INVENTION]

The composition and coloring agent of the present invention can change their colors in the presence of water or a water-containing liquid. Therefore, color changes in the composition or coloring agent of the present invention can be used to detect water or a water-containing liquid.

[MODES OF EMBODIMENT OF THE INVENTION]

Embodiments of the present invention are described below.

The composition of the present invention is a composition comprising at least an electron-donating color-developing organic compound, an electron-accepting compound, and a color development regulator, wherein the color development regulator is hydrophilic, the composition, in the absence of water, is in a state where the color development by electron donation and acceptance between the electron-donating color-developing organic compound and the electron-accepting compound is hampered by the color development regulator, while, in the color development hampered composition, the color development hampering of the color development regulator will be suppressed by water or a water-containing liquid to cause the color development by electron donation and acceptance between the electron-donating color-developing organic compound and the electron-accepting compound, the composition, in the presence of water or a water-containing liquid, is in a state where the color development by electron donation and acceptance between the electron-donating color-developing organic compound and the electron-accepting compound occurs.

In addition, the coloring agent of the present invention comprises the composition of the present invention retained or carried by the specified microbody and can change its color in the presence of water or a water-containing liquid, wherein the specified microbody is such that water or a water-containing liquid can come into contact with the retained or carried composition.

(1) An electron-donating color-developing organic compound and an electron-accepting compound develop a color as electrons are donated and accepted therebetween; however, in the presence of a solvent as the third component, the bond of the electron-donating color-developing organic compound and the electron-accepting compound is broken, and the color disappears.

In the case of conventional ordinary thermochromic coloring matters, it is known that the electron bond is broken to make the color disappear when the solvent as the third component is liquid above the melting point, and that the electron bond is formed by electron donation and acceptance to develop a color when the solvent is solid under the melting point. Hence, the color changes reversibly as electron donation and acceptance occurs reversibly.

On the other hand, the present invention is based on the new finding that in a composition comprising at least three components: an electron-donating color-developing organic compound, an electron-accepting compound, and a color development regulator, the color development by electron donation and acceptance between the electron-donating color-developing organic compound and the electron-accepting compound is hampered by the action of the color development regulator, wherein the action is suppressed by water or a water-containing liquid to cause color development by electron donation and acceptance between the electron-donating color-developing organic compound and the electron-accepting compound because the color development regulator is hydrophilic.

The composition of the present invention or the composition in the coloring agent of the present invention comprises the at least three components described above; even if containing any component other than the three components, the composition of the present invention or the composition in the coloring agent of the present invention can change its color in the presence of water or a water-containing liquid by the action of the three components.

(2) Electron-donating color-developing organic compound

An electron-donating color-developing organic compound is a component that develops a color upon a color-developing reaction with an electron-accepting compound (color developer substance), a representative electron-donating color-developing organic compound is known as a leuco dye.

Examples of useful electron-donating color-developing organic compounds include, but are not limited to, leuco dyes known as pressure sensitive copying paper dyes or thermal recording paper dyes and traditionally known leuco dyes that constitute thermochromic composition.

Examples of useful electron-donating color-developing organic compounds include compounds of triphenylmethane phthalide series, fluoran series, phenothiazine series, indolyl phthalide series, leucoauramine series, spiropyran series, rhodamine lactam series, triphenylmethane series, triazene series, spirophthalane xanthene series, naphtholactam series, and azomethine series.

More specifically, electron-donating color-developing organic compounds include, but are not limited to, 3,6-dimethoxyfluoran, 3,6-dibutoxyfluoran, 3-diethylamino-7-chlorofluoran, 3-diethylamino-7-phenylaminofluoran, 3-chloro-6-phenylaminofluoran, 3-diethylamino-6,8-dimethylfluoran, 3-diethylamino-6-methyl-7-chlorofluoran, 3,3-bis(1-n-butyl-2-methyl-indol-3-yl)phthalide, 3-(4-diethylaminophenol)-3-(1-ethyl-2-methylindol-3yl)phthalide, 3-(4-diethylamino-2-methyl)phenyl-3-(1,2-dimethylindol-3-yl)phthalide, 3-diethylamino-7,8-benzofuran, 6-(dimethylamino)-3,3-bis[4-(dimethylamino)phenyl]-1 (3H)-isobenzofuran, 3-(2-methyl-4diethylaminophenol)-3-(1-methyl-2-methylindol-3-yl)phthalide, 2-(N-phenyl-N-methylamino)-6-(N-p-tolyl-N-ethylamino)fluoran, 3-(4-diethylamino-2-ethoxyphenol)-3-(1-ethyl-2-methoxyindol-3-yl)-4-azaphthalide, 7-(4-diethylamino-2-hexyloxy-phenyl)-7-(1-ethyl-2-methyl-1H-indol-3-yl)-7H-furo(3,4-b)pyridin-5-one, 3,3-bis(p-diethylaminophenyl)-6-dimethylaminophthalide, 3,3-bis(p-dimethylaminophenyl)-6-dimethylaminophthalide, 3,3'-bis(p-dimethylaminophenyl)phthalide, 4,4'-bis(diethylamino)benzophenone, 3-cyclohexylamino-6-chlorofluoran, spiro[isobenzofuran-1 (3H), 9'-[9H]xanthen]-3-one, 6'(propylmethylamino)-3'-methyl-2'-phenylamino, 3-butylamino-6-methyl-7-anilinofluoran, spiro[isobenzofuran-1(3H), 9'-[9H]xanthen]-3-one, 6'-(isobutylethylamino)-3'-methyl-2'-phenylamino, spiro[isobenzofuran-1(3H), 9'-[9H]xanthen]-3-one, 6'-(cyclohexylmethylamino)-3'-methyl-2'-phenylamino, 3-diethylamino-6-methyl-7-xylidinofluoran, 3-diethylamino-7-chloro-anilinofluoran, 2'-(2-chloroanilino)-6'-dibutylaminospiro (phthalide-3,9'-xanthene), 3,3-bis(1-ethyl-2-methyl-indol-3-yl)phthalide, 3-(4-ethylphenol)amino-2-ethoxyphenyl)-3-(1-ethyl-2-methylindol-3-yl)-4-azaphthalide, 3,6-bisdiphenylaminofluoran, 5'-chloro-6'-methyl-3,6-bisdiphenylaminofluoran, 2-(dibutylamino)-8-(diethylamino)-4-methylspiro[5H-(1)benzopyrano(2,3-d)pyrimidine-5,1'-(3'H)-isobenzofuran]-3'-one, and 3,3-bis(4-diethylamino-2-ethoxyphenyl)-4-azaphthalide.

A composition comprising the at least three components described above in the present invention can be used to optionally adjust the developed color of the composition, when using an electron-donating color-developing organic compound alone or a combination of two kinds or more as its component.

(3) Electron-accepting compound

An electron-accepting compound (color developer substance) is a component for color developer by a color-developing reaction with an electron-donating color-developing organic compound such as leuco dye.

Useful electron-accepting compounds (color developer substances) include traditionally those known as color developers for pressure sensitive copying paper, color developers for thermal recording paper, and color developers for thermochromic compositions, other organic color developer substances, and other acid color developer substances; specific examples include oleophilic substances such as bisphenol derivatives and benzotriazole derivatives.

More specific examples of electron-accepting compounds (color developer substances) include, but are not limited to, 5-butylbenzotriazole, bisbenzotriazole-5-methane, 1,1'-biphenyl-4,4'-diol, o-methylenebisphenol, p-methylenebisphenol, 2,2'-bisphenol, 4,4'-isopropylidenediphenol, 2,2'-bis(4-hydroxyphenyl)hexafluoropropane, bis(4-hydroxyphenyl)sulphate, 4,4'-(2-ethylhexylidene)bisphenol, 4,4'-hexylidenebisphenol, 4,4'-octylidenebisphenol, 4,4'-(4-methyloctylidene)bisphenol, 4,4'-decylidenebisphenol, 4,4'-(1,3-dimethylbutylidene)bisphenol, 4,4'-(1,5-dimethylhexylidene) bisphenol, 4,4'-(1-methyl-4-methylheptylidene)bisphenol, 4,4'-(2-ethyl-hexylidene)bisphenol, 4,4'-(1-ethyl-octylidene) bisphenol, 4,4'-ethylidenebisphenol, 2,2'-methylenebis(4-methylphenol), 4,4'-(1-methyl-ethylidene)bis(2-methylphenol), 4,4'-cyclohexylidenebisphenol, 4,4'-(1-phenylethylidene)bisphenol, 4,4'-(1-methyl-propylidene)bisphenol, 4,4'-(2-methyl-propylidene)bisphenol, 4,4'-cyclopentylidenebisphenol, 4,4'-(phenylmethylene)bisphenol, bis(3-allyl-4-hydroxyphenyl)sulfone, 4-hydroxy-4-isopropoxydiphenylsulfone, 4,4'-dihydroxydiphenylsulfone, 2,4-dihydroxydiphenylsulfone, para-oxybenzoic acid, gallic acid, and hydroquinone.

The composition comprising at least three components described above in the present invention can have electron-accepting compounds (color developer substances) used alone or in combination of two kinds or more as its components.

(4) Color development regulator

(4-1) A color development regulator acts to prevent the color development by an electron-donating color-developing organic compound and an electron-accepting compound, having an effect to prevent the color development by electron donation and acceptance between the electron-donating color-developing organic compound and the electron-accepting compound (desensitizing effect) in the composition comprising at least three components described above in the present invention. On the other hand, because this color development regulator is hydrophilic, the effect of the color development regulator in the composition is suppressed by water or a water-containing liquid, causing color development by electron donation and acceptance between the electron-donating color-developing organic compound and the electron-accepting compound to change the color of the composition.

(4-2) The fact that "the effect of the color development regulator to hamper the color development by electron donation and acceptance between the electron-donating color-developing organic compound and the electron-accepting compound is suppressed by water or a water-containing liquid" means that the action of the color development regulator to hamper the color development by electron donation and acceptance between the electron-donating color-developing organic compound and the electron-accepting compound is suppressed as the composition comes into contact with water or a water-containing liquid, or as the composition gets wet with water or a water-containing liquid. If the hydrophilicity of the color development regulator changes with temperature and is low, there can be cases where the effect of the color development regulator is not suppressed or suppressed to low degrees, even when the composition comes into contact with water or a water-containing liquid, or when the composition gets wet with water or a water-containing liquid. The action of the color development regulator is considered to be difficult to suppress merely by humidity changes in the air and the like around the composition.

(4-3) A color development regulator is a component related to the basis of the color development function of water or a water-containing liquid in the present invention, and is required to be hydrophilic.

To ensure a distinct color change (visibility in particular) in the composition of the present invention or coloring agent by water or a water-containing liquid, the difference in solubility parameter ($\delta$) between the electron-accepting compound and the color development regulator may be between plus and minus 3, for example. The difference is preferably between plus and minus 2, more preferably between plus and minus 1.5.

Hence, by allowing the electron-accepting compound (color developer substance) and the color development regulator to have mutually as close solubility parameter ($\delta$) as possible, it is possible to enhance as much as possible the effect of the color development regulator to hamper the color development by electron donation and acceptance between the electron-donating color-developing organic compound and electron-accepting compound (desensitization) in the composition comprising the at least three components described above in the present invention,. This makes it possible to prevent as much as possible the color development by electron donation and acceptance between the electron-donating color-developing organic compound and the electron-accepting compound in a state of the composition prior to color change in the presence of water or a water-containing liquid, and to make distinct the difference from the color development by electron donation and acceptance between the electron-donating color-developing organic compound and the electron-accepting compound in the presence of water or a water-containing liquid (color change, particularly its visibility).

(4-5) The solubility parameter (SP value) ($\delta$) [unit of measurement (cal/cm$^3$)$^{1/2}$] can be calculated by the Fedors method using the equation [1] below:

$$\delta=(\Sigma\Delta ei/\Sigma\Delta vi)^{1/2} \ ....[1]$$

[In the equation [1] above, "$\Delta ei$" represents the energy of vaporization (cal/mol) of an atom or atomic group, and "$\Delta vi$" represents the molar volume (cm$^3$/mol). For the various parameters of atoms and atomic groups required for the calculation, refer to R. F. Fedors, Polym. Eng. Sci. 14,147 (1974).]

(4-6) In addition, for ensuring the color change (particularly its visibility) of the composition of the present invention or coloring agent in the presence of water or a water-containing liquid, it is preferable that the solubility in water (g/100 g $H_2O$) of the color development regulator used be not less than 100 at least at the use environment temperature of the composition or coloring agent of the present invention (a temperature at which at least water or a water-containing liquid can be present, e.g., normal temperature, 1-40 degrees C, 5-30 degrees C, 40-80 degrees C, 60-90 degrees C, 0-100 degrees C). The solubility is more preferably not less than 200, still more preferably infinite. The use environment is, for example, an environment wherein color changes of the composition or coloring agent of the present invention in the presence of water or a water-containing liquid are required.

By using a color development regulator whose solubility in water is as high as possible, the effect of the color development regulator to hamper the color development by electron donation and acceptance between the electron-donating color-developing organic compound and the electron-accepting compound (desensitization) is suppressed as much as possible by water or a water-containing liquid, to cause color development by electron donation and acceptance between the electron-donating color-developing organic compound and the electron-accepting compound as effectively as possible (e.g., color development at high densities); this produces a more distinct difference from the state prior to color change by water or a water-containing liquid (color change, particularly its visibility).

Regarding the mechanism of color changes by contact of the composition of the present invention or the composition in the coloring agent of the present invention in the presence of water or a water-containing liquid or by wetting of the composition with water or a water-containing liquid, the color change can be considered to occur as follows: When the water solubility (g/100 g $H_2O$) of the color development regulator in the composition is sufficiently high, e.g., not less than 100, the color development regulator comes into contact with water and becomes a mixed solvent with water, which has a high solubility parameter ($\delta$=23.4); as a result, the difference in solubility parameter ($\delta$) between the mixed solvent and the electron-accepting compound widens, so that the effect of the color development regulator to hamper the color development by electron donation and acceptance between the electron-donating color-developing organic compound and the electron-accepting compound (desensitization) is no longer available. However, the present invention is not limited to this explanation of the mechanism.

(4-7) Examples of color development regulator include, but are not limited to, 1-methoxy-2-propanol, 1-ethoxy-2-propanol, ethylene glycol, propylene glycol, diethylene glycol, diethylene glycol monomethyl ether, dipropylene glycol, dipropylene glycol monomethyl ether, triethylene glycol, tripropylene glycol, glycerine, tetraethylene glycol, polyethylene glycol 200, polyethylene glycol 300, polyethylene glycol 400, polyethylene glycol 600, polyethylene glycol 1000, polyethylene glycol 2000, polyethylene glycol 4000, polyethylene glycol 6000, polypropylene glycol 20000, polypropylene glycol 400, polypropylene glycol 750, 1,3-propanediol, 1,3-butanediol, 1,5-pentanediol, 1,6-hexanediol, and 1,3-cyclohexanediol.

A composition comprising at least three components described above in the present invention can have color development regulators used alone or in combination of two kinds or more as its components.

(4-8) In addition, by using a color development regulator having a vapor pressure at 20 degrees C of not more than 0.01 mmHg, volatilization in the daily environment is sufficiently prevented to allow the composition or coloring agent of the present invention to stably retain the function to change its color in the presence of water or a water-containing liquid for a long period.

The color development regulator alone may be liquid, solid, plastic, or fluid at the use environmental temperature of the composition of the present invention or coloring agent.

(5) Specified microbody

(5-1) The specified microbody in the coloring agent of the present invention is to constitute a coloring agent capable of changing its color in the presence of water or a water-containing liquid by retaining or carrying the composition comprising at least an electron-donating color-developing organic compound, an electron-accepting compound, and a color development regulator, wherein water or a water-containing liquid can come into contact with the retained or carried composition.

Examples of such specified microbodies include those wherein outside water or a water-containing liquid can come into contact with the composition retained or carried by a large number of pores and the like directly or via pores, like porous substances such as powdery porous substances as microbodies, and those wherein outside water or a water-containing liquid can come into contact with the internally retained or carried composition via a large number of pores, like porous microcapsules. However, these examples are not to be construed as limiting the specified microbody that can be used in the present invention.

Hence, it is possible to allow a coloring agent, which comprises the composition comprising the at least three components described above carried by the specified microbody, to change its color stably and as quickly as possible in the presence of water or a water-containing liquid, while the content ratio of the composition is maintained in individual specified microbodies. To ensure that the color change in the retained or carried composition occurs as clearly as possible, particularly with distinct visibility, it is preferable that the specified microbody be colorless, white-colored, or light-colored and transparent; however, these conditions are not to be construed as limiting.

(5-2) In the coloring agent of the present invention, the composition is preferably retained or carried in the form of solid by the specified microbody. However, this condition is not to be construed as limiting; for example, the composition may be retained or carried by the specified microbody in the form of a viscous substance or in other plastic or fluid form (e.g., adsorbed or adhered to, or impregnated in, a large number of pores of powdery porous substance, or enclosed in porous microcapsules).

The coloring agent of the present invention may be obtained by applying a composition comprising at least an electron-donating color-developing organic compound, an electron-accepting compound, and a color development regulator, which is preferably in the form of a liquid composition or in the form of another plastic or fluid composition prepared by, for example, hot-melt dissolution, hot-melt mixing, or thermal dissolution, to the specified microbody (e.g., the composition is adhered or adsorbed to, or impregnated or enclosed in the specified microbody). In the coloring agent, the composition is retained or carried preferably as a solid, or retained or carried (e.g., adhered, adsorbed, impregnated, or enclosed) in the form of, for example, a viscous substance or other plastic or fluid forms, by the specified microbody, in the use environment (e.g., use environmental temperature).

(5-3) Preferred examples of the specified microbody in the coloring agent of the present invention include porous substances such as powdery porous substances.

(a) To ensure that the composition comprising at least an electron-donating color-developing organic compound, an electron-accepting compound, and a color development regulator is stably carried by a porous substance, and the color development by electron donation and acceptance between the electron-donating color-developing organic compound and the electron-accepting compound in the presence of water or a water-containing liquid is effectively visible (e.g., visible at high densities), it is preferable that the pore volume or pore diameter or both of the porous substance as the specified microbody be as follows:

The pore volume of the porous substance is preferably not less than 0.3 $cm^3/g$. The pore volume is more preferably not less than 0.4 $cm^3/g$, still more preferably not less than 0.5 $cm^3/g$.

The pore diameter of the porous substance is preferably not less than 20 angstroms. The pore diameter is more preferably not less than 50 angstroms, still more preferably not less than 100 angstroms.

(b) Examples of porous substances that can be used in the coloring agent of the present invention include, but are not limited to, $SiO_2$ (silicon dioxide) such as MIZUKASIL P-78D (MIZUKASIL is a trademark of Mizusawa Industrial Chemicals Ltd.), MIZUKASIL 78A, MIZUKASIL P707, MIZUKASIL C-444, MIZUKASIL No30, MIZUKASIL P58C, MIZUKASIL 758C, SYLYSIA 350 (SYLYSIA is a trademark of Fuji Silysia Chemical Ltd.), SYLYSIA 420, SYLYSIA 430, Godd Ball E-90C (Godd Ball is a trademark of Suzuki Yushi Industrial Co., Ltd.), Godd Ball D11C, Godd Ball SF-16C, Godd Ball G-6C, Godd Ball B-6C, and Godd Ball B-25C; acid clays such as MIZUKA ACE300 (MIZUKA ACE is a trademark of Mizusawa Industrial Chemicals Ltd.); and $SiO_2/Al_2O_3$ (silicon dioxide / alumina complex) such as SIPERNAT820A (SIPERNAT is a trademark of Evonik Operations GmbH) and Galleon Neutral D2-Y (Galleon is a trademark of Mizusawa Industrial Chemicals Ltd.); as well as diatomaceous earths, bentonites, and clays.

Porous substances in the coloring agent of the present invention may be used alone or in combination of two kinds or more.

(c) When the specified microbody is a porous substance, the coloring agent of the present invention may be obtained by, for example, applying a composition comprising at least an electron-donating color-developing organic compound, an electron-accepting compound, and a color development regulator, which is preferably in the form of a liquid composition or in the form of another plastic or fluid composition prepared by, for example, hot-melt dissolution, hot-melt mixing, or thermal dissolution, to the porous substance as the specified microbody, wherein the compound is adhered or adsorbed to, or impregnated in the porous substance. In the coloring agent thereafter obtained, the composition is retained or carried preferably as a solid, or retained or carried (e.g., adhered, adsorbed or impregnated) in the form of, for example, a viscous substance or other plastic or fluid forms, by the porous substance, in the use environment.

The operation of allowing the composition comprising at least three components described above to be retained or carried by a porous substance as the specified microbody by adherence, adsorption, impregnation, and the like can be performed by, for example, making at least three components liquid (or another plastic or fluid form) by hot-melt dissolution, hot-melt mixing, or thermal dissolution, and adding them to a continuously stirred particles of a porous substance such as a powdery porous substance as the specified microbody.

Specifically, the procedure can be performed as follows:
For example, in a heat-resistant container, 1 part of an electron-donating color-developing organic compound, and, 3 to 5 parts of an electron-accepting compound and 5 to 20 parts of a color development regulator with a difference in solubility parameter ($\delta$) between plus and minus 2, are mixed in a thermally molten state at 100 to 160 degrees C. A powdery porous substance having a pore volume of not less than 0.3 cm$^3$/g and a pore diameter of not less than 20 angstroms is continuously stirred in another heat-resistant container, and the thermally molten composition is gradually added into the container, whereby the composition is carried by particles of the powdery porous substance by adsorption (or impregnation and the like).

Alternatively, for example, the same porous substance as that described above may be continuously stirred with heating at 100 to 160 degrees C in a heat-resistant container, and the composition in a hot-melt state may be gradually added to allow the composition to be carried by the composition to particles of the powdery porous substance by adsorption (or impregnation and the like).

When using this operation to allow the composition comprising the at least three components described above to be retained or carried by particles of a porous substance such as a powdery porous substance as the specified microbody, whether the maximum possible amount retained or carried (saturated retention or carriage) is exceeded or not can be determined on the basis of whether the composition is in the form of particles of a microbody such as a powder or not (e.g., in a mixture of particles of a microbody and a liquid substance or other plastic or fluid substance, or in a semi-fluid state), after adding the at least three components described above in liquid (or other plastic or fluid form) to a continuously stirred particles of a porous substance as the specified microbody. Even if the amount of the composition does not reach the saturated retention or carriage, the composition can fail to come into the same state of particles of a microbody such as a powder in case of insufficient stirring or other operations for allowing the composition to be retained or carried by particles of a porous substance as the specified microbody.

(d) The maximum amount of the composition that can be retained or carried by a porous substance such as a powdery porous substance as the specified microbody (saturated retention or carriage) varies depending mainly on the pore volume and pore diameter of the porous substance, generally falling in the range of 0.5 to 1.5 parts of the composition relative to 1 part of the porous substance.

To ensure as distinct a difference as possible in the color of the coloring agent of the present invention between before and after the color change in the presence of water or a water-containing liquid (particularly the visibility thereof), it is preferable that a composition comprising the at least three components described above at the saturated retention or carriage (or a similar amount, e.g., 50% by mass of saturated retention or carriage or more, preferably 70% by mass or more, more preferably 80% by mass or more, still more preferably 90% by mass or more, and yet still more preferably 95% by mass or more) be retained or carried by a porous substance such as a powdery porous substance as the specified microbody.

In the case of a mixture of particles of a porous substance as the specified microbody retaining or carrying the composition at the saturated retention or carriage (or in an amount smaller than the saturated retention or carriage if the stirring and other operations are insufficient to allow the composition to be retained or carried by particles of a porous substance as the specified microbody) and the composition not retained or carried by a porous substance as the specified microbody, there are concerns that the composition bleeds over time, and that the effect of the color development regulator in the composition to hamper the color development by the electron-donating color-developing organic compound and the electron-accepting compound is made insufficient by a trace amount of water (liquid) produced due to humidity changes in the air to produce a slightly color-developing state.

(6) The composition of the present invention, i.e., the above-described composition comprising at least an electron-donating color-developing organic compound, an electron-accepting compound, and a color development regulator, may contain a non-color-changeable pigment or dye that does not change its color with water.

In this case, the composition of the present invention assumes a color from the non-color-changeable pigment or dye, whether the color development by electron donation and acceptance between the electron-donating color-developing organic compound and the electron-accepting compound is hampered by the action of the color development regulator, or a color is developed by electron donation and acceptance between the electron-donating color-developing organic compound and the electron-accepting compound, while the action is suppressed by water or a water-containing liquid.

The non-color-changeable pigment may be an inorganic pigment or an organic pigment; examples of useful pigments include, but are not limited to, carbon black pigments and iron oxide pigments as black pigments; azo pigments, quinacridone pigments, diketopyrrolopyrrole pigments, cromophtal pigments, and anthraquinones pigments as red pigments; azo pigments, imidazolone pigments, and titanium pigments as yellow pigments; indanthrene pigments and azo pigments as orange pigments; phthalocyanine pigments as blue or green pigments; and dioxazine pigments and quinacridone pigments as purple pigments.

Examples of the useful non-color-changeable dyes include, but are not limited to, dispersion dyes, acid dyes, and cationic dyes.

The non-color-changeable pigment or dye is preferably used in a state previously dispersed or dissolved in the color development regulator as a component of the composition.

The amount used of the non-color-changeable pigment or dye is preferably in a range that does not inhibit the visibility of the color change of the composition of the present invention or the coloring agent of the present invention by water or a water-containing liquid. Specifically, it is preferable that the non-color-changeable pigment or dye be blended generally in the range of 0.0001 to 1 part relative to 100 parts of the composition of the present invention.

(7) Intended uses, applications, and the like of the coloring agent of the present invention

(7-1) The coloring agent of the present invention can be used as retained in various forms, for example,

forms wherein the coloring agent is bonded to a desired object (sheet-like articles such as paper and synthetic resin films, tabular or other shapes of articles made of wood, synthetic resin, or other materials) in a visible manner (including forms wherein the same or different coloring agents are bonded to a plurality of portions in various arrangements or portions arranged in rows, lattices, or matrices),

forms wherein a coloring agent is enclosed in a retainer that is water-permeable and externally visible (e.g., bags, containers, and gaps among sheet-like, tabular, or other forms of materials) (including forms wherein the same or different coloring agents are enclosed in a plurality of retainers in various arrangements or retainers arranged in rows, lattices, or matrices),

forms as mixed in a water-absorbing material such as water-absorbing resin powder, and

forms as mixed in a material that can be mixed or kneaded with the addition of water;

these forms are not to be construed as limiting.

(7-2) Examples of uses of articles retaining the coloring agent of the present invention in various forms as described above include, but are not limited to,

sheet-like article for detection of water;

detection of article's wetting with water and article's immersion in water (water submersion); display of levels of water or a water-containing liquid;

clothing, hats/caps, gloves, socks, shoes, umbrellas, miscellaneous goods, toys, building walls/roofs, sidewalks, roadways, and other roads that retain the coloring agent of the present invention (e.g., in at least surface portions of these articles) and change their colors with water (including those that produce letters, symbols, figures, pictures, for example, upon color changes);

sheet-like articles such as paper or synthetic resin films, and tabular or other shapes of articles made of wood, synthetic resin, metal, or other materials, that retain the coloring agent of the present invention on their surface portion, and that can change the color of a desired portion thereof to a single color with the same coloring agent or a plurality of different colors with different coloring agents to write letters and draw pictures with water or a water-containing liquid (e.g., by finger actions, or using writing pens, writing brushes, painting brushes, or ink jet printers that can supply water or a water-containing liquid to the desired portion);

making water from urine excretion and the like to be visible by mixing a coloring agent in a portion or all of water-absorbing resin powder or the like of disposable diapers or nappies and other articles for water absorption, or by bonding a coloring agent to a portion or all of a water-proof sheet portion covering a water-absorbing portion of an article for water absorption;

wheat flour clay powders (or other clay materials) blended with one kind or a plurality of kinds of coloring agent, and processed into a clay-like state with addition of water, or then kneaded with addition of water, to yield a monochromatic or multi-colored wheat flour clay (or other clay materials) or a wheat flour clay (or other clay materials) that changes its color to a single color or a plurality of various colors;

silicone putty clays (or other clays) blended with one kind or a plurality of kinds of coloring agent, kneaded with a white or light-colored silicone putty clay (or other clays), and re-kneaded with applied or added water, to yield a monochromatic or multiple-colored silicone putty clay (or other clays).

(7-3) By blending at least the coloring agent of the present invention in a water-insoluble vehicle comprising a solvent or dispersion medium or both and a bonding resin for bonding to an object, a coloring material such as a printing ink (e.g., gravure printing ink, flexographic printing ink, offset printing ink, screen printing ink, ink jet ink), paint, or coating material, which coloring material contains at least the coloring agent of the present invention, can be obtained.

By applying this coloring material such as a printing ink, paint, or coating material to an object (e.g., a surface of the object), a color-changing article that can change its color in the presence of water or a water-containing liquid can be obtained wherein at least the coloring agent of the present invention is bonded to an object (e.g., a sheet-like article such as a paper or a synthetic resin film, a surface of tabular or other form of article made of wood, synthetic resin, metal, or another material).

The vehicle blended with the coloring agent of the present invention is water-insoluble. Aqueous vehicles should not be used, because the coloring agent of the present invention changes its color by water at the time of blending with the coloring agent of the present invention.

Examples of bonding resins for water-insoluble vehicles include, but are not limited to, polyester resins, polyacrylate resins, polyurethane resins, polyvinyl chloride resins, polyethylene vinyl acetate resins, polyamide resins, and rosin ester resins that are soluble in oleophilic organic solvents; these resins may be used alone or in combination of two kinds or more. By dissolving such a bonding resin in an oleophilic organic solvent such as a solvent in the ester series, solvent in the ketone series, solvent in the aromatic hydrocarbon series, solvent in the alcohol series, or solvent in the aliphatic hydrocarbon series, a vehicle can be obtained.

The water-insoluble vehicle may be blended with an antifoaming agent, thickener, crosslinking agent, ultraviolet absorbent, antioxidant, moisturizer, moisture absorbent, non-color-changeable organic or inorganic pigment or dye that does not change its color with water, and the like.

By blending 1 to 50 parts, for example, of the coloring agent of the present invention to 100 parts of the resulting water-insoluble vehicle, a coloring material such as a printing ink (e.g., gravure printing ink, flexographic printing ink, offset printing ink, screen printing ink, ink jet ink), paint, or coating material can be obtained. The viscosity and other characteristics of this coloring material should be suitable for individual methods and uses for printing, painting, coating, and the like.

The present invention is hereinafter described by means of the following Examples, which, however, are not to be construed as limiting the present invention. In the descriptions below, part(s) and % mean part(s) by weight and % by weight, respectively.

[EXAMPLES]

Example 1

In a heat-resistant glass container of 1 liter capacity,

4 parts of 3-(4-diethylaminophenol)-3-(1-ethyl-2-methylindol-3yl)phthalide [an electron-donating color-developing organic compound as a blue leuco dye],
16 parts of 4,4'-(1,3-dimethylbutylidene)bisphenol [an electron-accepting compound, solubility parameter $\delta 1 = 11.88$], and
36 parts of polyethylene glycol 400 [a color development regulator, solubility parameter $\delta 2 = 11.1$, vapor pressure $9 \times 10^{-5}$ mmHg [100 degrees C], solubility in water $= \infty$ (infinite)] were mixed, after which they were heated to 100 degrees C and mixed, to yield a liquid composition ($\delta 1 - \delta 2 = 0.78$).

Subsequently, in another heat-resistant glass container of 2-liter capacity,
44 parts of MIZUKASIL P-78D [a powdery white porous substance $SiO_2$ produced by Mizusawa Industrial Chemicals Ltd., pore volume $= 1.7$ cm$^3$/g, average pore diameter $= 170$ angstroms] were measured. While this powdery porous substance was heated to 110 degrees C and stirred in a mechanical mixer, the 100 degrees C liquid composition was gradually added to this powdery porous substance, and the mixture was thoroughly stirred, to yield a white powder having the composition carried by the porous substance.

The resulting white powder was identified as a powdery coloring agent that instantaneously changes its color from white to dark blue when fed with water (liquid).

When the resulting white powder was stored, without contact with water, at normal temperature for 1 year, the powder remained white. When fed with water (liquid), the powder instantaneously changed its color from white to dark blue, and no time-related changes were observed.

The results are shown in Table 1.

Example 2

In a heat-resistant glass container of 1 liter capacity,

3.5 parts of 2-(N-phenyl-N-methylamino)-6-(N-p-tolyl-N-ethylamino)fluoran [an electron-donating color-developing organic compound as a green leuco dye],
15 parts of 4,4'-(1-phenylethylidene)bisphenol [an electron-accepting compound, solubility parameter $\delta 1=12.34$], and
37.5 parts of polyethylene glycol 200 [a color development regulator, solubility parameter $\delta 2=12.76$, vapor pressure 0.000075 mmHg [20 degrees C], solubility in water = $\infty$ (infinite)] were mixed, after which they were heated to 100 degrees C and mixed, to yield a liquid composition ($\delta 1-\delta 2=-0.42$).

Subsequently, in another heat-resistant glass container of 2-liter capacity,

44 parts of MIZUKASIL P-78D [a powdery white porous substance $SiO_2$ produced by Mizusawa Industrial Chemicals Ltd., pore volume = 1.7 $cm^3$/g, average pore diameter = 170 angstroms]
were measured. While this powdery porous substance was heated to 110 degrees C and stirred in a mechanical mixer, the 100 degrees C liquid composition was gradually added to this powdery porous substance, and the mixture was thoroughly stirred, to yield a white powder having the composition carried by the porous substance.

The resulting white powder was identified as a powdery coloring agent that instantaneously changes its color from white to dark green when fed with water (liquid).

When the resulting white powder was stored, without contact with water, at normal temperature for 1 year, the powder remained white. When fed with water (liquid), the powder instantaneously changed its color from white to dark green, and no time-related changes were observed.

The results are shown in Table 1.

Example 3

In a heat-resistant glass container of 1 liter capacity,

2.5 parts of 3-(4-diethylaminophenol)-3-(1-ethyl-2-methylindol-3yl)phthalide [an electron-donating color-developing organic compound as a blue leuco dye],
10 parts of 4,4'-(1,3-dimethylbutylidene)bisphenol [an electron-accepting compound, solubility parameter $\delta 1=11.88$], and
32 parts of polyethylene glycol 400 [a color development regulator, solubility parameter $\delta 2=11.1$, vapor pressure $9 \times 10^{-5}$ mmHg [100 degrees C], solubility in water = $\infty$ (infinite)] were mixed, after which they were heated to 100 degrees C and mixed, to yield a liquid composition ($\delta 1-\delta 2=0.78$).

Subsequently, in another heat-resistant glass container of 2-liter capacity,
55.5 parts of SIPERNAT820A [a powdery white porous substance $SiO_2/Al_2O_3$ produced by Evonik Operations GmbH, pore volume =0.47 $cm^3$/g, average pore diameter =200 angstroms] were measured. While this powdery porous substance was heated to 110 degrees C and stirred in a mechanical mixer, the 100 degrees C liquid composition was gradually added to this powdery porous substance, and the mixture was thoroughly stirred, to yield a white powder having the composition carried by the porous substance.

The resulting white powder was identified as a powdery coloring agent that instantaneously changes its color from white to dark blue when fed with water (liquid).

When the resulting white powder was stored, without contact with water, at normal temperature for 1 year, the powder remained white. When fed with water (liquid), the powder instantaneously changed its color from white to dark blue, and no time-related changes were observed.

The results are shown in Table 1.

Example 4

In a heat-resistant glass container of 1 liter capacity,

3.5 parts of 3-(4-diethylamino-2-ethoxyphenol)-3-(1-ethyl-2-methoxyindol-3-yl)-4-azaphthalide [an electron-donating color-developing organic compound as a blue leuco dye], 13.5 parts of 4,4'-(2-ethylhexylidene)bisphenol [an electron-accepting compound, solubility parameter $\delta 1=11.61$], and
30 parts of tripropylene glycol [a color development regulator, solubility parameter $\delta 2=12.06$, vapor pressure 0.00105 mmHg [25 degrees C], solubility in water $= \infty$ (infinite)] were mixed, after which they were heated to 100 degrees C and mixed, to yield a liquid composition ($\delta 1$-$\delta 2$=-0.45).

Subsequently, in another heat-resistant glass container of 2-liter capacity,

53 parts of MIZUKASIL C-444 [a powdery white porous substance $SiO_2$ produced by Mizusawa Industrial Chemicals Ltd., pore volume = 1.6 $cm^3$/g, average pore diameter = 180 angstroms]
were measured. While this powdery porous substance was heated to 110 degrees C and stirred in a mechanical mixer, the 100 degrees C liquid composition was gradually added to this powdery porous substance, and the mixture was thoroughly stirred, to yield a white powder having the composition carried by the porous substance.

The resulting white powder was identified as a powdery coloring agent that instantaneously changes its color from white to dark blue when fed with water (liquid).
When the resulting white powder was stored, without contact with water, at normal temperature for 1 year, the powder remained white. When fed with water (liquid), the powder instantaneously changed its color from white to dark blue, and no time-related changes were observed.
The results are shown in Table 1.

Table 1

| | Electron donating compound | Electron accepting compound | $\delta1$ | Color development regulator | $\delta2$ | $\delta1-\delta2$ | Vapor pressure mmHg | Solubility in water | Porous substance | Pore volume $cm^3/g$ | Average pore diameter (angstroms) | Color before water detection | Color after water detection | Stability in 1-year storage |
|---|---|---|---|---|---|---|---|---|---|---|---|---|---|---|
| Example 1 | 3-(4-diethylaminopheno 1)-3-(1-ethyl-2-methylindol-3yl)phthalide | 4,4'-(1,3-dimethyl-butylide ne)bi-sphenol | 11.88 | Polyethylene glycol 400 | 11.1 | 0.78 | $9x10^{-5}$ [100°C] | $\infty$ | MIZUKA SIL P-78D | 1.7 | 170 | White | Dark blue | Good |
| Example 2 | 2-(N-phenyl-N-methylamino)-6-(N-p-tolyl-N-ethylamino)fluoran | 4,4'-(1-pheny-lethylidene )bi-sphenol | 12.34 | Polyethylene glycol 200 | 12.76 | -0.42 | 0.000075 [20°C] | $\infty$ | MIZUKA SIL P-78D | 1.7 | 170 | White | Dark green | Good |
| Example 3 | 3-(4-diethylaminopheno 1)-3-(1-ethyl-2-methylindol-3yl)phthalide | 4,4'-(1,3-dimethyl-butylide ne)bi-sphenol | 11.88 | Polyethylene glycol 400 | 11.1 | 0.78 | $9x10^{-5}$ [100°C] | $\infty$ | SIPERNA T820A | 0.47 | 200 | White | Dark blue | Good |
| Example 4 | 3-(4-diethylami-no-2-ethoxyphe-nol)-3-(1-ethyl-2-methylindol-3-yl)-4-azaphthalide | 4,4'-(2-ethylhexylidene) bisphenol | 11.61 | Tripropylene glycol | 12.06 | -0.45 | 0.00105 [25°C] | $\infty$ | MIZUKA SIL C-444 | 1.6 | 180 | White | Dark blue | Good |

13

Comparative Example 1

In a heat-resistant glass container of 1 liter capacity,

4 parts of 3-(4-diethylaminophenol)-3-(1-ethyl-2-methylindol-3yl)phthalide [an electron-donating color-developing organic compound as a blue leuco dye],
16 parts of 4,4'-(1,3-dimethylbutylidene)bisphenol [an electron-accepting compound, solubility parameter $\delta1=11.88$], and
36 parts of propylene glycol [a color development regulator, solubility parameter $\delta2=15.91$, vapor pressure 0.08 mmHg [20 degrees C], solubility in water $=\infty$ (infinite)] were mixed, after which they were heated to 100 degrees C and mixed, to yield a liquid composition ($\delta1-\delta2=-4.03$).

Subsequently, in another heat-resistant glass container of 2-liter capacity,

44 parts of MIZUKASIL P-78D [a powdery white porous substance $SiO_2$ produced by Mizusawa Industrial Chemicals Ltd., pore volume $= 1.7$ cm$^3$/g, average pore diameter $= 170$ angstroms]
were measured. While this powdery porous substance was heated to 110 degrees C and stirred in a mechanical mixer, the 100 degrees C liquid composition was gradually added to this powdery porous substance, and the mixture was thoroughly stirred, to yield a blue powder having the composition carried by the porous substance.

When the resulting blue powder was fed with water (liquid), the color changed from blue to dark blue; however, the change was not well visible. This is presumed to be attributable to the fact that the difference in solubility parameter is large between the electron-accepting compound and the color development regulator.
When the resulting blue powder (not fed with water) was stored, without contact with water, at normal temperature for 1 year, the blue color darkened. When fed with water (liquid), the powder changed its color to darker blue, and the visibility of the change decreased further. These time-related changes are presumed to be attributable to larger volatilizations over time because the vapor pressure of propylene glycol used as the color development regulator was high.
The results are shown in Table 2.

Comparative Example 2

In a heat-resistant glass container of 1 liter capacity,

4 parts of 3-(4-diethylaminophenol)-3-(1-ethyl-2-methylindol-3yl)phthalide [an electron-donating color-developing organic compound as a blue leuco dye],
16 parts of 4,4'-(1,3-dimethylbutylidene)bisphenol [an electron-accepting compound, solubility parameter $\delta1=11.88$], and
36 parts of polyethylene glycol 20000 [a color development regulator, solubility parameter $\delta2=9.41$, vapor pressure less than $7\times10^{-3}$ mmHg [20 degrees C], solubility in water = not less than 50]
were mixed, after which they were heated to 100 degrees C and mixed, to yield a liquid composition ($\delta1-\delta2=2.47$).

Subsequently, in another heat-resistant glass container of 2-liter capacity,

44 parts of MIZUKASIL P-78D [a powdery white porous substance $SiO_2$ produced by Mizusawa Industrial Chemicals Ltd., pore volume $= 1.7$ cm$^3$/g, average pore diameter $= 170$ angstroms]
were measured. While this powdery porous substance was heated to 110 degrees C and stirred in a mechanical mixer, the 100 degrees C liquid composition was gradually added to this powdery porous substance, and the mixture was thoroughly stirred, to yield a light blue powder having the composition carried by the porous substance.

When the resulting light blue powder was fed with water (liquid), the color changed from light blue to dark blue; however, the change was not well visible. This is presumed to be attributable to the fact that the water solubility of polyethylene glycol 20000 as the color development regulator is low, and that the difference in solubility parameter is somewhat large between the electron-accepting compound and the color development regulator.
When the resulting light blue powder (not fed with water) was stored, without contact with water, at normal temperature for 1 year, the powder remained light blue as before storage. When fed with water (liquid), the powder changed its color to dark blue as before storage, and no time-related changes were observed.
The results are shown in Table 2.

Comparative Example 3

In a heat-resistant glass container of 1 liter capacity,

4 parts of 3-(4-diethylaminophenol)-3-(1-ethyl-2-methylindol-3yl)phthalide [an electron-donating color-developing organic compound as a blue leuco dye],
16 parts of 4,4'-(1,3-dimethylbutylidene)bisphenol [an electron-accepting compound, solubility parameter $\delta 1=11.88$], and
36 parts of polyethylene glycol 400 [a color development regulator, solubility parameter $\delta 2=11.1$, vapor pressure $9\times10^{-5}$ mmHg [100 degrees C], solubility in water = $\infty$ (infinite)] were mixed, after which they were heated to 100 degrees C and mixed, to yield a liquid composition ($\delta 1-\delta 2=0.78$).

Subsequently, in another heat-resistant glass container of 2-liter capacity,

44 parts of Galleon Neutral D2-Y [a powdery white porous substance $SiO_2/Al_2O_3$ produced by Mizusawa Industrial Chemicals Ltd., pore volume = 0.3 cm$^3$/g, average pore diameter = 2.3 angstroms]
were measured. While this powdery porous substance was heated to 110 degrees C and stirred in a mechanical mixer, the 100 degrees C liquid composition was gradually added to this powdery porous substance, and the mixture was stirred, to yield a non-powdery clay-like or plastic substance.

Then, 40 parts of Galleon Neutral D2-Y was further added, and the mixture was heated and stirred to yield a powder, which powder, however, had a light blue color as if the composition was not adsorbed to the pores of the porous substance but coated on a surface of the porous substance. In contrast, when fed with water (liquid), the composition showed a slightly denser blue color, which, however, was a considerably lighter blue color than the dark blue color of the powder after being fed with water (liquid) in Example 1, the visibility of the color change was low so that the composition was not useful as an indicator for water detection.
This result is presumed to be attributable to the failure to sufficiently adsorb and carry the composition to the pores because the average pore diameter of the Galleon Neutral D2-Y used as the porous substance was small, and the pore volume was not large.
When the resulting light-blue powder (not fed with water) was stored at normal temperature avoiding water contact for 1 year, the color remained light blue as before storage. When fed with water (liquid), the powder showed a slightly denser light blue color as before storage. Hence, no time-related changes were observed, including low visibility of color changes.
The results are shown in Table 2.

Comparative Example 4

In a heat-resistant glass container of 1 liter capacity,

4 parts of 2-(N-phenyl-N-methylamino)-6-(N-p-tolyl-N-ethylamino)fluoran [an electron-donating color-developing organic compound as a green leuco dye],
16 parts of 4,4'-(1,3-dimethylbutylidene)bisphenol [an electron-accepting compound, solubility parameter $\delta 1=11.88$], and
36 parts of ethylene glycol [a color development regulator, solubility parameter $\delta 2=17.83$, vapor pressure 0.05 mmHg [20 degrees C], solubility in water = $\infty$ (infinite)] were mixed, after which they were thermally mixed at 100 degrees C, to yield a liquid composition ($\delta 1-\delta 2=-5.95$).

Subsequently, in another heat-resistant glass container of 2-liter capacity,

44 parts of MIZUKASIL P-78D [a powdery white porous substance $SiO_2$ produced by Mizusawa Industrial Chemicals Ltd., pore volume = 1.7 cm$^3$/g, average pore diameter = 170 angstroms]
were measured. While this powdery porous substance was heated to 110 degrees C and stirred in a mechanical mixer, the 100 degrees C liquid composition was gradually added to this powdery porous substance, and the mixture was thoroughly stirred, to yield a dark green powder having the composition carried by the porous substance.

When the resulting dark green powder was fed with water (liquid), the color changed to a darker green; however, the visibility of the change was low. This is presumed to be attributable to the fact that the difference in solubility parameter is large between the electron-accepting compound and the color development regulator.

When the resulting dark green powder (not fed with water) was stored, without contact with water, at normal temperature for 1 year, the dark green color darkened further. When this powder was fed with water (liquid), no color change was observed. These time-related changes are presumed to be attributable to larger volatilizations over time because the vapor pressure of ethylene glycol used as the color development regulator was high.

The results are shown in Table 2.

Table 2

|  | Electron donating compound | Electron accepting compound | $\delta 1$ | Color development regulator | $\delta 2$ | $\delta 1$-$\delta 2$ | Vapor pressure mmHg | Solubility in water | Porous substance | Pore volume cm$^3$/g | Average pore diameter (angstroms) | Color before water detection | Color after water detection | Stability in 1-year storage |
|---|---|---|---|---|---|---|---|---|---|---|---|---|---|---|
| Comparative Example 1 | 3-(4-diethylaminopheno 1)-3-(1-ethyl-2-methylindol-3yl)phthalide | 4,4'-(1,3-di-methylbutylidene)bisphenol | 11.88 | Propylene glycol | 15.91 | -4.03 | 0.08 [20°C] | $\infty$ | MIZUKA SIL P-78D | 1.7 | 170 | Blue | Dark blue | Poor |
| Comparative Example 2 | 3-(4-diethylaminopheno l)-3-( l-ethyl-2-methylindol-3yl)phthalide | 4,4'-(1,3-di-methylbutylidene)bisphenol | 11.88 | Polyethylene glycol 20000 | 9.41 | 2.47 | <7x10$^{-3}$ [20°C] | $\geq$50 | MIZUKA SIL P-78D | 1.7 | 170 | Light blue | Dark blue | Good |
| Comparative Example 3 | 3-(4-diethylaminopheno l)-3-(1-ethyl-2-methylindol-3yl)phthalide | 4,4'-(1,3-di-methylbutylidene)bisphenol | 11.88 | Polyethylene glycol 400 | 11.1 | 0.78 | 9x10$^{-5}$ [100°C] | $\infty$ | Galleon Neutral D2-Y | 0.3 | 2.3 | Light blue | Light blue | Good |
| Comparative Example 4 | 2-(N-phenyl-N-methylamino)-6-(N-p-tolyl-N-ethylamino)fluoran | 4,4'-(1,3-di-methylbutylidene)bisphenol | 11.88 | Ethylene glycol | 17.83 | -5.95 | 0.05 (20°C) | $\infty$ | MIZUKA SIL P-78D | 1.7 | 170 | Dark green | Dark green | Poor |

EP 4 116 379 B1

17

Example 5

A water-insoluble vehicle consisting of 30 parts of VYLON 670 (a saturated polyester resin produced by TOYOBO STC Co., Ltd.), 69 parts of xylene, and 1 part of TSE-350 (an antifoaming agent produced by Momentive Performance Materials Inc.) was blended with 30 parts of a powdery coloring agent prepared as described in Example 1 to yield a screen printing ink.

The entire surface of woodfree paper substrate was double printed with this screen printing ink using a 120-mesh screen plate.

This was dried at 60 degrees C to yield an indicator sheet of paper having a white color on the entire ink-printed surface.

When the alphabet M was written on the ink-printed surface of the resulting indicator sheet using a writing brush moistened with water, a letter of M in dark blue appeared instantaneously.

Example 6

A water-insoluble vehicle consisting of 50 parts of ARKON M100 (a petroleum resin produced by Arakawa Chemical Industries Ltd), 49 parts of toluene, and 1 part of TSE-350 (an antifoaming agent produced by Momentive Performance Materials Inc.) was blended with 50 parts of a powdery coloring agent prepared as described in Example 1, and 50 parts of toluene to yield a coating ink, and the resulting ink was applied over a 50-$\mu$m-thick polyester film substrate at a coating rate of 50 g/m$^2$ using a wire bar coater.

This was dried at 50 degrees C to yield an indicator film of polyester having a white color on the entire ink-applied surface.

When the resulting indicator film was cut into 1 m x 2 cm pieces and used as a simple water gage for a water reservoir, the water-level-reached portion of the ink-applied surface of the indicator film changed its color to dark blue.

Example 7

A water-insoluble vehicle consisting of 20 parts of VYLON 670 (a saturated polyester resin produced by TOYOBO STC Co., Ltd.), 49 parts of xylene, and 1 part of TSE-350 (an antifoaming agent produced by Momentive Performance Materials Inc.) was blended with 30 parts of a powdery coloring agent prepared as described in Example 1 to yield a screen printing ink.

Polka dots were printed with this screen printing ink on a white woodfree paper sticker substrate using a 120-mesh screen plate having polka dots of 1mm diameter.

This was dried at 60 degrees C and then cut into 3 cm x 3 cm pieces to yield a water submersion confirmation sticker printed with white polka dots on the white woodfree paper sticker.

When an electronic device with the resulting water submersion confirmation sticker applied therein was immersed in water for 10 minutes, the white polka dots printed on the water submersion confirmation sticker changed to dark blue polka dots, thus confirming water submersion of the device.

Example 8

Ninety-nine (99) parts of SANWET IM-1000 (a water-absorbing resin powder produced by Sanyo Chemical Industries, Ltd.) and 1 part of a powdery coloring agent prepared as described in Example 1 were uniformly mixed using a powder blender machine.

Ten (10) parts of the resulting water-absorbing resin powder mixture was allowed to absorb 300 parts of physiological saline instead of urination and examined for color changes. The results are shown in Table 3.

Example 9

Starting materials were treated and examined for color changes in the same manner as in Example 8 but using 1 part of the powdery coloring agent prepared in Example 2 in place of 1 part of the powdery coloring agent prepared in Example 1. The results are shown in Table 3.

Example 10

Starting materials were treated and examined for color changes in the same manner as in Example 8 but using 1 part of the powdery coloring agent prepared in Example 3 in place of 1 part of the powdery coloring agent prepared in Example 1. The results are shown in Table 3.

Example 11

Starting materials were treated and examined for color changes in the same manner as in Example 8 but using 1 part of the powdery coloring agent prepared in Example 4 in place of 1 part of the powdery coloring agent prepared in Example 1. The results are shown in Table 3.

Example 12

When performing an actual wearing test of a disposable diaper whose water absorption layer comprised the water-absorbing resin powder mixture obtained in Example 8, it was visually shown that a white water absorption layer changed its color to a dark blue color via an outer film of the disposable diaper with urination, confirming that the disposable diaper is functional as a urination indicator.

Comparative Example 5

Starting materials were treated and examined for color changes in the same manner as in Example 8 but using 1 part of the powdery coloring agent prepared in Comparative Example 1 in place of 1 part of the powdery coloring agent prepared in Example 1. The results are shown in Table 3.

Comparative Example 6

Starting materials were treated and examined for color changes in the same manner as in Example 8 but using 1 part of the powdery coloring agent prepared in Comparative Example 2 in place of 1 part of the powdery coloring agent prepared in Example 1. The results are shown in Table 3.

Comparative Example 7

Starting materials were treated and examined for color changes in the same manner as in Example 8 but using 1 part of the powdery coloring agent prepared in Comparative Example 3 in place of 1 part of the powdery coloring agent prepared in Example 1. The results are shown in Table 3.

Comparative Example 8

Starting materials were treated and examined for color changes in the same manner as in Example 8 but using 1 part of the powdery coloring agent prepared in Comparative Example 4 in place of 1 part of the powdery coloring agent prepared in Example 1. The results are shown in Table 3.

Table 3

|  | Water-absorbing resin powder mixture | Color before water absorption | Color after water absorption | Color change visibility |
|---|---|---|---|---|
| Example 8 | Example 1 | White | Dark blue | ○ |
| Example 9 | Example 2 | White | Dark green | ○ |
| Example 10 | Example 3 | White | Dark blue | ○ |
| Example 11 | Example 4 | White | Dark blue | ○ |
| Comparative Example 5 | Comparative Example 1 | Blue | Dark blue | × |
| Comparative Example 6 | Comparative Example 2 | Light blue | Dark blue | × |
| Comparative Example 7 | Comparative Example 3 | Light blue | Light blue | ×× |
| Comparative Example 8 | Comparative Example 4 | Dark green | Dark green | ×× |

Evaluation Criteria

○Excellently visible

×Poorly visible
××Very poorly visible

**Claims**

1. A composition comprising at least an electron-donating color-developing organic compound, an electron-accepting compound and a color development regulator,
   wherein

   the color development regulator is hydrophilic,
   the composition, in the absence of water, is in a state where the color development by electron donation and acceptance between the electron-donating color-developing organic compound and the electron-accepting compound is hampered by the color development regulator, while, in the color development hampered composition, the color development hampering of the color development regulator will be suppressed by water or a water-containing liquid to cause the color development by electron donation and acceptance between the electron-donating color-developing organic compound and the electron-accepting compound,
   the composition, in the presence of water or a water-containing liquid, is in a state where the color development by electron donation and acceptance between the electron-donating color-developing organic compound and the electron-accepting compound occurs.

2. The composition according to claim 1, wherein the color development regulator is one kind or two or more kinds selected from the group consisting of 1-methoxy-2-propanol, 1-ethoxy-2-propanol, ethylene glycol, propylene glycol, diethylene glycol, diethylene glycol monomethyl ether, dipropylene glycol, dipropylene glycol monomethyl ether, triethylene glycol, tripropylene glycol, glycerine, tetraethylene glycol, polyethylene glycol 200, polyethylene glycol 300, polyethylene glycol 400, polyethylene glycol 600, polyethylene glycol 1000, polyethylene glycol 2000, polyethylene glycol 4000, polyethylene glycol 6000, polypropylene glycol 20000, polypropylene glycol 400, polypropylene glycol 750, 1,3-propanediol, 1,3-butanediol, 1,5-pentanediol, 1,6-hexanediol, and 1,3-cyclohexanediol.

3. The composition according to claim 1 or 2, wherein the difference in solubility parameter ($\delta$) between the electron-accepting compound and the color development regulator is between plus and minus 3.

4. The composition according to any one of claims 1 to 3, wherein the solubility in water (g/100 g$H_2$O) of the color development regulator is not less than 100 at use environmental temperature.

5. The composition according to any one of claims 1 to 4, wherein the vapor pressure at 20 degrees C of the color development regulator is not more than 0.01 mmHg.

6. A coloring agent comprising the composition according to any one of claims 1 to 5, which composition is retained or carried by a specified microbody and can change its color in the presence of water or a water-containing liquid, wherein the specified microbody allows water or a water-containing liquid to come into contact with the retained or carried composition.

7. The coloring agent according to claim 6, wherein the specified microbody is a porous substance.

8. The coloring agent according to claim 7, wherein the porous substance is one kind or two or more kinds selected from the group consisting of silicon dioxide, acid clays, silicon dioxide alumina complex, diatomaceous earths, bentonites, and clays, and the pore volume of the porous substance is not less than 0.3 cm$^3$/g.

9. The coloring agent according to claim 7 or 8, wherein the average pore diameter of the porous substance is not less than 20 angstroms.

10. The coloring agent according to any one of claims 6 to 9, wherein the composition retained or carried by the specified microbody is solid or viscous in the use environment.

11. A manufacturing method for the coloring agent according to claim 10, comprising

   preparing a composition liquefied by melting or dissolution or both from at least an electron-donating color-developing organic compound, an electron-accepting compound. and a color development regulator that hampers the color development by the electron-donating color-developing organic compound and the electron-accepting compound, and

applying the liquefied composition to the specified microbody to allow the composition in a solidified or viscous state to be retained or carried by the specified microbody.

12. A color-changing article that retains the coloring agent according to any one of claims 6 to 10 at least in a surface portion thereof, and that can change its color in the presence of water or a water-containing liquid.

13. A water detection material comprising a water-absorbing resin powder or another water-absorbing material blended with the coloring agent according to any one of claims 6 to 10.

14. A coloring material comprising

a water-insoluble vehicle which comprises a solvent or dispersion medium or both and a bonding resin for bonding to an object and

at least the coloring agent according to any one of claims 6 to 10 blended in the water-insoluble vehicle.

15. A color-changing article which can change its color in the presence of water or a water-containing liquid, wherein the coloring material according to claim 14 is applied to the article to bond at least the coloring agent.


**Patentansprüche**

1. Zusammensetzung umfassend mindestens eine elektronenabgebende farbentwickelnde organische Verbindung, eine elektronenaufnehmende Verbindung und einen Farbentwicklungsregulator, wobei

der Farbentwicklungsregulator hydrophil ist,

die Zusammensetzung in der Abwesenheit von Wasser in einem Zustand ist, in dem die Farbentwicklung durch Elektronenabgabe und -aufnahme zwischen der elektronenabgebenden farbentwickelnden organischen Verbindung und der elektronenaufnehmenden Verbindung durch den Farbentwicklungsregulator gehemmt wird, während in der farbentwicklungsgehemmten Zusammensetzung die Farbentwicklungs-Hemmung des Farbentwicklungsregulators durch Wasser oder eine wasserhaltige Flüssigkeit unterdrückt wird, um die Farbentwicklung durch Elektronenabgabe und -aufnahme zwischen der elektronenabgebenden farbentwickelnden organischen Verbindung und der elektronenaufnehmenden Verbindung zu bewirken,

die Zusammensetzung in der Gegenwart von Wasser oder einer wasserhaltigen Flüssigkeit in einem Zustand ist, in dem die Farbentwicklung durch Elektronenabgabe und -aufnahme zwischen der elektronenabgebenden farbentwickelnden organischen Verbindung und der elektronenaufnehmenden Verbindung stattfindet.

2. Zusammensetzung nach Anspruch 1, wobei der Farbentwicklungsregulator eine Art oder zwei oder mehr Arten ist, ausgewählt aus der Gruppe bestehend aus 1-Methoxy-2-propanol, 1-Ethoxy-2-propanol, Ethylenglykol, Propylenglykol, Diethylenglykol, Diethylenglykolmonomethylether, Dipropylenglykol, Dipropylenglykolmonomethylether, Triethylenglykol, Tripropylenglykol, Glycerin, Tetraethylenglykol, Polyethylenglykol 200, Polyethylenglykol 300, Polyethylenglykol 400, Polyethylenglykol 600, Polyethylenglykol 1000, Polyethylenglykol 2000, Polyethylenglykol 4000, Polyethylenglykol 6000, Polypropylenglykol 20000, Polypropylenglykol 400, Polypropylenglykol 750, 1,3-Propandiol, 1,3-Butandiol, 1,5-Pentandiol, 1,6-Hexandiol und 1,3-Cyclohexandiol.

3. Zusammensetzung nach Anspruch 1 oder 2, wobei die Differenz des Löslichkeitsparameters ($\delta$) zwischen der elektronenaufnehmenden Verbindung und dem Farbentwicklungsregulator zwischen plus und minus 3 liegt.

4. Zusammensetzung nach einem der Ansprüche 1 bis 3, wobei die Löslichkeit in Wasser (g / 100 g $H_2O$) des Farbentwicklungsregulators bei Verwendungsumgebungstemperatur nicht weniger als 100 beträgt.

5. Zusammensetzung nach einem der Ansprüche 1 bis 4, wobei der Dampfdruck bei 20°C des Farbentwicklungsregulators nicht mehr als 0,01 mmHg beträgt.

6. Färbemittel umfassend die Zusammensetzung nach einem der Ansprüche 1 bis 5, wobei die Zusammensetzung von einem spezifizierten Mikrokörper gehalten oder getragen wird und in der Gegenwart von Wasser oder einer wasserhaltigen Flüssigkeit ihre Farbe ändern kann,
wobei der spezifizierte Mikrokörper es Wasser oder einer wasserhaltigen Flüssigkeit erlaubt, mit der gehaltenen oder getragenen Zusammensetzung in Kontakt zu kommen.

7. Färbemittel nach Anspruch 6, wobei der spezifizierte Mikrokörper eine poröse Substanz ist.

8. Färbemittel nach Anspruch 7, wobei die poröse Substanz eine Art oder zwei oder mehr Arten ist, ausgewählt aus der Gruppe bestehend aus Siliciumdioxid, sauren Tonen, Siliciumdioxid-Aluminiumoxid-Komplex, Diatomeenerden, Bentoniten und Tonen, und das Porenvolumen der porösen Substanz nicht weniger als 0,3 cm$^3$/g beträgt.

9. Farbstoff nach Anspruch 7 oder 8, wobei der durchschnittliche Porendurchmesser der porösen Substanz nicht weniger als 20 Ångström ist.

10. Färbemittel nach einem der Ansprüche 6 bis 9, wobei die Zusammensetzung, die von dem spezifizierten Mikrokörper gehalten oder getragen wird, in der Verwendungsumgebung fest oder viskos ist.

11. Herstellungsverfahren für das Färbemittel nach Anspruch 10, umfassend Herstellen einer Zusammensetzung, die verflüssigt wird durch Schmelzen oder Auflösen oder beides von mindestens einer elektronenabgebenden farbentwickelnden organischen Verbindung, einer elektronenaufnehmenden Verbindung und einem Farbentwicklungsregulator, der die Farbentwicklung durch die elektronenabgebende farbentwickelnde organische Verbindung und die elektronenaufnehmende Verbindung hemmt, und
Aufbringen der verflüssigten Zusammensetzung auf den spezifizierten Mikrokörper, um es der Zusammensetzung in einem verfestigten oder viskosen Zustand zu erlauben, von dem spezifizierten Mikrokörper gehalten oder getragen zu werden.

12. Farbwechselnder Gegenstand, der das Färbemittel nach einem der Ansprüche 6 bis 10 mindestens in einem Oberflächenabschnitt davon hält, und der in der Gegenwart von Wasser oder einer wasserhaltigen Flüssigkeit seine Farbe ändern kann.

13. Wasserdetektionsmaterial, umfassend ein wasserabsorbierendes Harzpulver oder ein anderes wasserabsorbierendes Material, das mit dem Färbemittel nach einem der Ansprüche 6 bis 10 gemischt ist.

14. Färbematerial, umfassend

eine wasserunlösliche Trägersubstanz, die ein Lösungsmittel oder Dispersionsmedium oder beides und ein Bindeharz zum Binden an ein Objekt umfasst, und
mindestens das Färbemittel nach einem der Ansprüche 6 bis 10, das in die wasserunlösliche Trägersubstanz gemischt ist.

15. Farbwechselnder Gegenstand, der seine Farbe in der Gegenwart von Wasser oder einer wasserhaltigen Flüssigkeit ändern kann,
wobei das Färbematerial nach Anspruch 14 auf den Gegenstand aufgebracht ist, um mindestens das Färbemittel zu binden.

**Revendications**

1. Composition comprenant au moins un composé organique développant une couleur donneur d'électrons, un composé accepteur d'électrons et un régulateur de développement de couleur,

dans laquelle
le régulateur de développement de couleur est hydrophile,
en l'absence d'eau, la composition est dans un état où le développement de couleur par don et acceptation d'électrons entre le composé organique développant une couleur donneur d'électrons et le composé accepteur d'électrons est entravé par le régulateur de développement de couleur, tandis que, dans la composition entravée dans le développement de couleur, l'entrave au développement de couleur du régulateur de développement de couleur est supprimée par l'eau ou un liquide contenant de l'eau, ce qui provoque le développement de couleur par don et acceptation d'électrons entre le composé organique développant une couleur donneur d'électrons et le composé accepteur d'électrons,

en présence d'eau ou d'un liquide contenant de l'eau, la composition est dans un état où le développement de couleur par don et acceptation d'électrons entre le composé organique développant une couleur donneur d'électrons et le composé accepteur d'électrons se produit.

2. Composition selon la revendication 1, dans laquelle le régulateur de développement de couleur est un type ou deux ou plusieurs types choisis dans le groupe consistant en le 1-méthoxy-2-propanol, le 1-éthoxy-2-propanol, l'éthylèneglycol, le propylèneglycol, le diéthylèneglycol, l'éther monométhylique de diéthylèneglycol, le dipropylèneglycol, l'éther monométhylique de dipropylèneglycol, le triéthylèneglycol, le tripropylèneglycol, la glycérine, le tétraéthylèneglycol, le polyéthylèneglycol 200, le polyéthylèneglycol 300, le polyéthylèneglycol 400, le polyéthylèneglycol 600, le polyéthylèneglycol 1000, le polyéthylèneglycol 2000, le polyéthylèneglycol 4000, le polyéthylèneglycol 6000, le polypropylèneglycol 20000, le polypropylèneglycol 400, le polypropylèneglycol 750, le 1,3-propanediol, le 1,3-butanediol, le 1,5-pentanediol, le 1,6-hexanediol et le 1,3-cyclohexanediol.

3. Composition selon la revendication 1 ou 2, dans laquelle la différence de paramètre de solubilité ($\delta$) entre le composé accepteur d'électrons et le régulateur de développement de couleur est entre plus et moins 3.

4. Composition selon l'une quelconque des revendications 1 à 3, dans laquelle la solubilité dans l'eau (g/100 g $H_2O$) du régulateur de développement de couleur n'est pas inférieure à 100 à la température environnementale d'utilisation.

5. Composition selon l'une quelconque des revendications 1 à 4, dans laquelle la pression de vapeur à 20°C du régulateur de développement de couleur n'est pas supérieure à 0,01 mm Hg.

6. Agent colorant comprenant la composition selon l'une quelconque des revendications 1 à 5, laquelle composition est retenue ou portée par un microcorps spécifié et peut changer de couleur en présence d'eau ou d'un liquide contenant de l'eau, dans lequel le microcorps spécifié permet à l'eau ou à un liquide contenant de l'eau d'entrer en contact avec la composition retenue ou portée.

7. Agent colorant selon la revendication 6, dans lequel le microcorps spécifié est une substance poreuse.

8. Agent colorant selon la revendication 7, dans lequel la substance poreuse est un type ou deux ou plusieurs types choisis dans le groupe consistant en le dioxyde de silicium, les argiles acides, un complexe dioxyde de silicium-alumine, les terres de diatomées, les bentonites et les argiles, et le volume poreux de la substance poreuse n'est pas inférieur à 0,3 cm$^3$/g.

9. Agent colorant selon la revendication 7 ou 8, dans lequel le diamètre moyen des pores de la substance poreuse n'est pas inférieur à 20 angströms.

10. Agent colorant selon l'une quelconque des revendications 6 à 9, dans lequel la composition retenue ou portée par le microcorps spécifié est solide ou visqueuse dans l'environnement d'utilisation.

11. Procédé de fabrication pour l'agent colorant selon la revendication 10, comprenant

la préparation d'une composition liquéfiée par fusion ou dissolution ou les deux à partir d'au moins un composé organique développant une couleur donneur d'électrons, d'un composé accepteur d'électrons et d'un régulateur de développement de couleur qui entrave le développement de couleur par le composé organique développant une couleur donneur d'électrons et le composé accepteur d'électrons, et

l'application de la composition liquéfiée au microcorps spécifié pour permettre à la composition dans un état solidifié ou visqueux d'être retenue ou portée par le microcorps spécifié.

12. Article changeant de couleur qui retient l'agent colorant selon l'une quelconque des revendications 6 à 10 au moins dans une partie de sa surface, et qui peut changer de couleur en présence d'eau ou d'un liquide contenant de l'eau.

13. Matériau de détection d'eau comprenant une poudre de résine absorbant l'eau ou un autre matériau absorbant l'eau mélangé à l'agent colorant selon l'une quelconque des revendications 6 à 10.

14. Matériau colorant comprenant

un véhicule insoluble dans l'eau qui comprend un solvant ou un milieu de dispersion ou les deux et une résine liante pour la liaison à un objet et
au moins l'agent colorant selon l'une quelconque des revendications 6 à 10 mélangé dans le véhicule insoluble dans l'eau.

15. Article changeant de couleur qui peut changer de couleur en présence d'eau ou d'un liquide contenant de l'eau, dans lequel le matériau colorant selon la revendication 14 est appliqué à l'article pour lier au moins l'agent colorant.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4597001 B
- JP 2002200423 A
- JP 3396971 B
- JP 2008111774 A
- WO 5996400 A
- JP SHO5536326 A
- EP 2012112 A1
- JP 2012230044 A
- JP 5996400 B